Europäisches Patentamt

European Patent Office

Office européen des brevets

(19)

(11) Veröffentlichungsnummer: **0 224 808
B1**

(12) **EUROPÄISCHE PATENTSCHRIFT**

(45) Veröffentlichungstag der Patentschrift:
20.09.89

(51) Int. Cl.⁴: **B29C 65/20**
// B29L23:22

(21) Anmeldenummer: 86116118.0

(22) Anmeldetag: 21.11.86

(54) Vorrichtung zum kontinuierlichen Schweissen bzw. Siegeln von Nähten von Kunststoff-Folien.

(30) Priorität: 29.11.85 DE 3542256

(43) Veröffentlichungstag der Anmeldung:
10.06.87 Patentblatt 87/24

(45) Bekanntmachung des Hinweises auf die Patenterteilung:
20.09.89 Patentblatt 89/38

(84) Benannte Vertragsstaaten:
AT BE CH DE FR GB IT LI NL SE

(56) Entgegenhaltungen:
DE-A- 1 938 568
DE-A- 2 423 321
DE-A- 2 907 849
US-A- 3 257 257
US-A- 3 314 591

(73) Patentinhaber: HOECHST AKTIENGESELLSCHAFT,
Postfach 80 03 20, D-6230 Frankfurt am Main 80(DE)

(72) Erfinder: Heyse, Klaus, Kelkheimer Strasse 10,
D-6232 Bad Soden(DE)
Erfinder: Klenk, Ludwig, Jungferweg 20,
D-6227 Oestrich-Winkel III(DE)

## Beschreibung

Die Erfindung betrifft eine Vorrichtung zum kontinuierlichen Schweißen bzw. Siegeln von Nähten von Kunststoff-Folien, mit zumindest einer Vorratsrolle für Flachfolien, mit einer Siegeltrommel, bei der über einen Teilumfang die Flachfolien geführt sind, mit einem endlosen, elektrisch erwärmten Heizband, das mittels Umlenk- und Spannrollen radial an die über den Teilumfang der sich drehenden Siegeltrommel geführten Flachfolien angedrückt ist.

Kontinuierlich arbeitende Folienschweiß- oder -siegelmaschinen verwenden umlaufende beheizte Stahlbänder und werden in der Verpackungstechnik beispielsweise zum Siegeln von Kopfnähten an gefüllten Kunststoffbeuteln oder -säcken im Durchlaufverfahren benutzt.

In der DE-A 2 423 321 ist eine Vorrichtung gemäß dem Oberbegriff des Anspruchs 1 zum kontinuierlichen Schweißen von Nähten von Kunststoff-Folien bekannt, die Vorratsrollen für Flachfolien umfaßt, die über einen Teilumfang einer Siegeltrommel übereinander liegend geführt sind. Es ist ein endlos umlaufender Heizdraht vorgesehen, der im Bereich der Überlappungs- oder Stoßnaht mit Hilfe von Umlenk- oder Spannrollen radial an den Teilumfang der sich drehenden Siegeltrommel angedrückt wird. Das Verschweißen der Flachfolien erfolgt bei dieser Vorrichtung ohne Verwendung eines zusätzlichen Siegelbandes. Bei dieser bekannten Vorrichtung sind auch keine Vorkehrungen getroffen, die eine Kühlung der Siegeltrommel außerhalb des Siegelbereichs vorsehen.

In der US-A 3 314 591 ist bei einer Vorrichtung und einem Verfahren zur Herstellung von Beuteln die Verwendung zusätzlicher Siegelbänder als Mittel zur Verbesserung von Siegelnähten von überlappenden Längsrändern eines Werkstoffbandes beschrieben.

Das von einer Vorratsrolle kommende Siegelband wird dabei mit Siegelrollen so an einem Längsrand des Werkstoffbandes fixiert, daß es bei der anschließenden Überlappung der Längsränder zwischen diese zu liegen kommt und bei der Verschweißung als zusätzliches Siegelmaterial dient.

Durch Veränderung der Temperatur und des Anpreßdrucks der Heizbänder, der Fördergeschwindigkeit der Heizbänder und der Länge der Heizstrecke läßt sich das Siegeln bzw. Schweißen folienspezifisch anpassen.

Große Nachteile treten jedoch wegen der hohen Gleitreibung zwischen den Heizelementen und den Stahlbändern auf, da die Gleitreibung zu Verschleiß und störendem Abrieb führt. Höhere Siegelgeschwindigkeiten sind im Dauerbetrieb nicht zu erreichen. Nachteilig ist auch die ungleichmäßge spezifische Siegeldruckverteilung, bedingt durch die wegen Temperaturdehnung in den Heizelementen, beispielsweise in Gestalt von Heizbacken, auftretenden Verwerfungen der Wärmeübertragungsgleitflächen. Hieraus resultiert des weiteren eine ungleichförmige Temperaturverteilung in dem einzelnen Stahlband infolge unterschiedlicher Wärmeübertragungswiderstände zwischen den Heizbacken und dem Stahlband.

Insgesamt gesehen eignen sich die bekannten Schweiß- und Siegelmaschinen nicht zum sicheren Herstellen von anspruchsvollen Schweiß- oder Siegelnähten bei höheren Siegelgeschwindigkeiten im Dauerbetrieb.

Aus der offengelegten europäischen Patentanmeldung 80 120 ist eine Vorrichtung zur Herstellung eines Schlauches aus einer flachen Folienbahn unter Bildung einer Längsnaht bekannt, die einen Formkörper mit einer im Querschnitt im wesentlichen kreisförmigen Innenbohrung zur äußeren Abstützung des geformten Schlauchs im Bereich der gegenseitigen Überlappung der Randzonen der Bahn und einen kreiszylinderförmigen Innendorn zur inneren Abstützung des geformten Schlauchs umfaßt. Des weiteren ist zum Führen und Abstandshalten der Bahnkanten der Folienbahn ein flexibler Streifen vorhanden, der eine im Querschnitt gebogene, in ihrer Krümmung dem Schlauchumfang anpaßbare Form mit einem oder zwei abstehenden Rändern an den Längskanten aufweist. Die Siegelung der mit dieser Vorrichtung hergestellten Schläuche erfolgt im allgemeinen auf einer taktweise arbeitenden Schweiß- bzw. Siegelmaschine, wie sie voranstehend als im Stand der Technik bekannte Maschine beschrieben ist. Durch die taktweise Siegelung ist die Arbeitsgeschwindigkeit derartiger Siegelmaschinen gering und liegt bei etwa 10 m Schlauch pro Minute.

Zur Herstellung eines Schlauchs aus einer flachen Folienbahn werden üblicherweise Falthilfen, wie Formschultern oder Formköpfe verwendet, wie sie in der DE-A-30 13 320 beschrieben sind, und durch welche die Bahn gebogen und gefaltet wird, so daß sie eine Längsnaht bilden, entlang der eine Verklebung erfolgt. Die beiden Randzonen können auch durch einen Folienstreifen, ein sogenanntes Siegelband, miteinander verbunden werden, wobei es genügt, daß die Randzonen ohne Überlappung aneinanderstoßen.

In der US-A-2,148,884 ist eine Vorrichtung beschrieben, die einen im Inneren des geformten Schlauchs angeordneten Dorn zur Abstützung verwendet, während von außen eine Rolle gegen den Schlauch angepreßt wird. Ein exakte Führung der sich überlappenden Randzonen der Bahn ist mit diesen Falthilfen nicht gewährleistet, so daß der gebildete Schlauch keinen gleichmäßigen Umfang besitzt.

Die aus der US-A-2,856,742 bekannte Formeinrichtung weist zwei einander gegenüberliegende Formteile auf, die sich bogenförmig jeweils auf eine Randzone der Bahn von außen anlegen. Beide Formteile sind im Abstand zueinander in Richtung der Schlauchbahn angeordnet und daher für solche Bahnen nicht geeignet, bei denen auf einer Randzone vor der Schlauchformung ein Klebemittel aufgebracht ist. Die sich überlappenden Randzonen sind nämlich nur im Bereich zwischen den beiden Formteilen voneinander getrennt, so daß die Gefahr besteht, daß die Randzonen bereits vor dem Passieren des ersten Formteils miteinander verkleben.

In der US-A-2,285,263 ist eine Einrichtung zur Schlauchformung beschrieben, in der die Bahn von innen und außen abgestützt und an ihren Rändern geführt ist. Die äußere Abstützung der Bahn erfolgt durch einen gewölbten Stahlkörper, der die Bahnränder schraubenförmig aneinander annähert. Das Bahnmaterial wird dabei stark mechanisch beansprucht, da die Bahn bei der Schlauchformung bereits vor der Überlappung ihrer Ränder durch den Metallkörper gezwungen wird, eine vorgegebene Form einzunehmen.

Aufgabe der Erfindung ist es, eine Vorrichtung zu schaffen, die bei wesentlich höheren Schweiß- bzw. Siegelgeschwindigkeiten als bei bekannten taktweise arbeitenden Vorrichtungen, die kontinuierliche Herstellung von Schweiß- und Siegelnähten an Kunststoff-Folien, bzw. die Herstellung von Schläuchen aus schweiß- bzw. siegelfähigen Kunststoffen ermöglicht.

Diese Aufgabe wird erfindungsgemäß durch eine Vorrichtung in der Weise gelöst, daß eine Vorratsrolle mit einem Siegelband vorhanden ist, das über Umlenkrollen zu den übereinander gelegten Flachfolien oder zu einer zur Schlauchhülle gefalteten Flachfolie geführt ist und die Überlappungs- bzw. Stoßnaht der Flachfolien bzw. der Flachfolie während des Schweißens bzw. Siegelns überdeckt, daß zumindest eine Kühlwalze im Endpunkt des Teilumfangs an der Siegeltrommel anliegt und daß die geschweißten Flachfolien bzw. die gesiegelte Schlauchhülle nach dem Ablösen im Endpunkt des Teilumfangs von der Siegeltrommel über die Kühlwalze geführt sind bzw. geführt ist.

In Ausgestaltung der Erfindung sind an dem Teilumfang der Siegeltrommel Einspeiserollen für elektrischen Strom zum widerstandsmäßigen Erhitzen des Heizbandes vorhanden und sind Schleifkontakte in Gestalt von Kohlebürsten mit einem regelbaren Transformator als Stromquelle verbunden und liegen an den beiden Seiten der Einspeiserollen an.

Zweckmäßigerweise besteht das Heizband aus legiertem Stahl und umschlingt die Siegeltrommel mit einem Winkel zwischen 180° bis 270°, und ferner liegt die eine Einspeiserolle im Anfangspunkt des Teilumfangs und die andere Einspeiserolle in einem Punkt des Teilumfangs der Siegeltrommel an, der einem Umschlingungswinkel des Heizbandes zwischen 180° und 210° entspricht. Nach der Schweiß- bzw. Siegelung wird der Nahtbereich der Schlauchhülle, der am Umfang der Siegeltrommel anliegt, durch ein Stahlband gekühlt.

Der legierte Stahl des Heizbandes ist zweckmässigerweise eine Stahl-Chrom-Nickel-Legierung.

In Weiterbildung der Erfindung sind die Einspeiserollen zum Maschinengestell hin elektrisch isoliert gelagert und teilt sich der eingespeiste Gesamtstrom von den Einspeiserollen aus in zwei Teilströme, einen Siegeltrumstrom und einen Rücklauftrumstrom auf.

Die weitere Ausgestaltung der Erfindung ergibt sich aus den Ansprüchen 6 bis 11.

Im folgenden wird die Erfindung anhand von zwei zeichnerisch dargestellten Ausführungsbeispielen näher erläutert.

Es zeigen:

Fig. 1 eine schematische perspektivische Ansicht einer Vorrichtung mit einer Siegeltrommel für eine einzelne Siegelbahn, nach der Erfindung,

Fig. 2 eine Teilansicht einer Kühleinrichtung für die Überlappungs- bzw. Stoßnaht der gesiegelten Schlauchhülle bzw. der im Randbereich sich überlappenden Kunststoff-Folien und

Fig. 3 eine schematisch perspektivische Ansicht, ähnlich zu Fig. 1, einer Vorrichtung für mehrere Siegelbahnen.

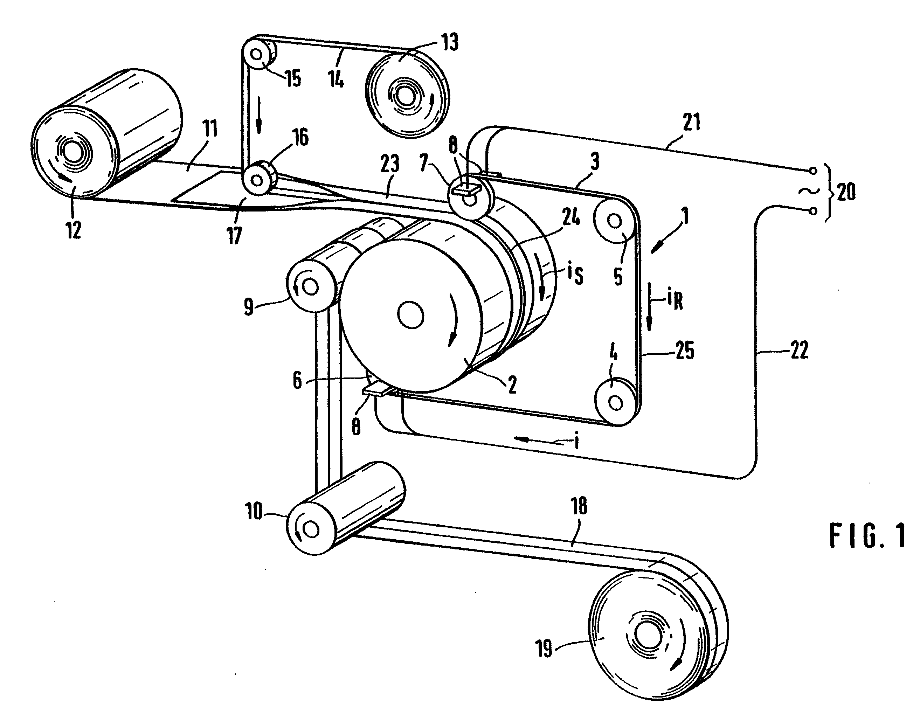

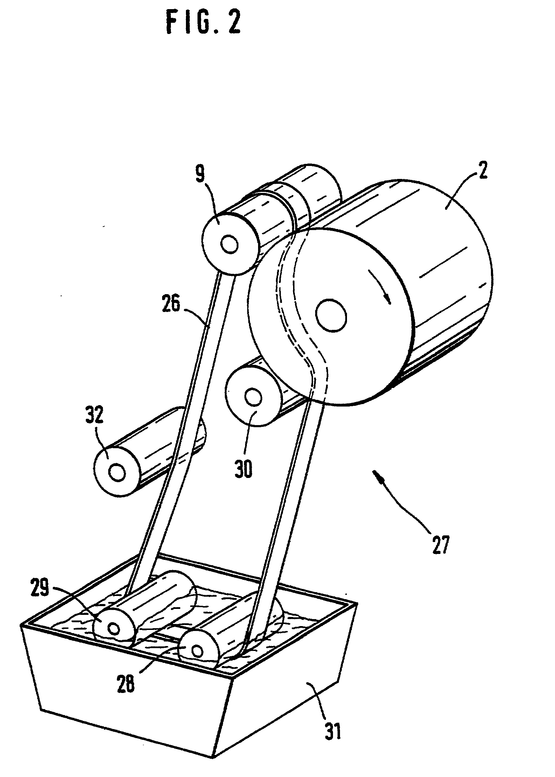

Die in Fig. 1 dargestellte Siegelvorrichtung 1 besteht aus einer Siegeltrommel 2 bzw. Siegelwalze, einem Heizband 3, das über Umlenk- und Spannrollen 4 und 5 sowie Einspeiserollen 6,7 für elektrischen Strom geführt ist und über einen Teilumfang der Siegeltrommel 2 unter Druck anliegt und Schleifkontakten 8, die zu beiden Seiten der Einspeiserollen 6 und 7 angebracht sind. An der Siegeltrommel 2 liegt des weiteren eine Kühlwalze 9 an, um die ein Stahlband einer Kühleinrichtung herumgeführt ist, die aus Gründen der besseren Übersichtlichkeit in Fig.1 nicht eingezeichnet ist. Einzelheiten dieser Kühleinrichtung ergeben sich aus Fig. 2, die weiter unten noch näher beschrieben werden wird.

Die Einspeiserollen 6 und 7 sind zum Mschinengestell hin elektrisch isoliert gelagert und mit schleifenden Kohlebürsten ausgerüstet, die zu beiden Seiten an jeder Einspeiserolle 6,7 anliegen und über elektrische Versorgungsleitungen 21,22 mit einer Stromquelle 20 verbunden sind. Die Stromquelle 20 ist beispielsweise ein regelbarer Transformator, und der Stromfluß durch das Heizband 3 zum Erreichen der benötigten Bandtemperatur wird über die von der Stromquelle 20 gelieferte Spannung geregelt. Der eingespeiste Gesamtstrom i teilt sich von den Einspeiserollen 6 und 7 aus in zwei Teilströme, nämlich einen Siegeltrumstrom $i_S$ und einen Rücklauftrumstrom $i_R$ auf. Der Siegeltrumstrom $i_S$ heizt elektrisch das Siegeltrum 24 des Heizbandes 3 auf, das einen bestimmten ohmschen Widerstand besitzt, der schaltungsmäßig parallel mit dem ohmschen Widerstand des Rücklauftrums 25 des Heizbandes 3 liegt. Durch die Bemessung der Längen des Siegeltrums 24 und des Rücklauftrums 25 des Heizbandes 3 besteht die Möglichkeit, die ohmschen Widerstände der beiden Trums zu verändern und somit die Erwärmung in beiden Trums des Heizbandes 3 relativ zueinander abzustimmen, so daß eine zu starke Erhitzung des Rücklauftrums 25, in dem außer Wärmestrahlung keine Wärmeabfuhr erfolgt, vermieden wird und somit eine Schädigung einer gegebenenfalls antiadhäsiven Beschichtung des Heizbandes infolge dieser Überhitzung ausgeschlossen wird. Das elektrisch widerstandsmäßig erhitzte Heizband 3 bringt sowohl die Wärme auf die zu siegelnde Schlauchhülle 23 als auch den erforderlichen Siegeldruck auf. Das Heizband 3 besteht im allgemeinen aus legiertem Stahl, insbesondere einer Stahl-Chrom-Nickel-Legierung mit relativ großem elektrischem Widerstand. Das Heizband 3 umschlingt die Siegeltrommel 2 mit einem Winkel zwischen 180° bis 270°, wobei die eine Einspeiserolle 7 im Anfangspunkt des Teilumfangs und die andere Einspeiserolle 6 in einem Punkt des Teilumfangs der Siegeltrommel 2 anliegt, der einem Umschlingungswinkel des Heizbandes 3 zwischen 180° und 210°

entspricht. Die Positionen der beiden Einspeiserollen 6 und 7 am Teilumfang der Siegeltrommel 2 können lagefest sein, es werden dann die ohmschen Widerstände des Siegeltrums 24 und des Rücklauftrums 25 des Heizbandes 3 in ihrem Verhältnis zueinander alleine durch die Bemessung der Länge des Rücklauftrums 25 ausgelegt, um eine Schädigung der antiadhäsiven Heizbandbeschichtung durch Überhitzen des Heizbandes 3 im Rücklauftrum zu vermeiden. Es besteht auch die Möglichkeit, obgleich dies zeichnerisch nicht dargestellt ist, die Position einer oder der beiden Einspeiserollen 6,7 entlang dem Teilumfang der Siegeltrommel 2 einzustellen, um die Längen des Siegeltrums 24 und des Rücklauftrums 25 des Heizbandes 3 zu verändern und somit den elektrischen Widerstand und die Erwärmung im Rücklauftrum 25 so auszulegen, daß keine Schädigung der antiadhäsiven Kunststoffbeschichtung des Heizbandes durch Überhitzen auftritt.

Die Kühlwalze 9 liegt in dem Endpunkt des Teilumfangs an der Siegeltrommel 2 an, in welchem die Siegelschlauchhülle 18 von der Siegeltrommel 2 abgelöst wird. Nach dem Ablösen wird die gesiegelte Schlauchhülle 18 über die Kühlwalze 9 geführt.

Das Ausgangsmaterial für die Herstellung der gesiegelten Schlauchhülle 18 ist eine Flachfolie 11, die sich als Wickel auf einer Vorratsrolle 12 befindet. Die Zuführung der Flachfolie 11 erfolgt von dem Rollenwickel der Vorratsrolle 12 über eine gegebenenfalls erforderliche, nicht dargestellte Bahnkantensteuerung in eine Faltvorrichtung, von der schematisch ein Schlauchformteil 17 in Fig. 1 angedeutet ist. In der Faltvorrichtung werden die Bahnkanten der Flachfolie 12 auf Stoß gebracht oder mit Überlappung zu der Schlauchhülle 23 geformt. Einzelheiten einer derartigen Faltvorrichtung sind beispielsweise der offengelegten europäischen Patentanmeldung 80 120 zu entnehmen, die auf die gleiche Anmelderin wie die vorliegende Anmeldung zurückgeht.

Oberhalb der Bahn der gefalteten bzw. geformten Schlauchhülle 23, die nach dem Verlassen der Faltvorrichtung flach liegt, befindet sich eine Vorratsrolle 13 für ein Siegelband 14. Das Siegelband 14 wird von dem Rollenwickel der Vorratsrolle 13 über Umlenkrollen 15 und 16 in Kontakt mit der vorgefalteten flachgelegten Schlauchhülle 23 gebracht und gemeinsam mit dieser der Siegeltrommel 2 zugeführt. Das Siegelband 14 überdeckt die Überlappungs- bzw. Stoßnaht der gefalteten Schlauchhülle 23. Nach der Faltvorrichtung läuft die vorgefaltete Schlauchhülle 23 mit dem in seine Lage über der Stoßnaht gebrachten Siegelband 14 zwischen der Siegeltrommel 2 und dem Heizband 3 hindurch. Durch die Wärme und den Druck des Heizbandes 3 erfolgt die Siegelung der gefalteten Schlauchhülle 23 mit dem Siegelband 14 zu der gesiegelten Schlauchhülle 18.

Bei überlappt zu siegelnden Schlauchhüllen 23 ist eine beidseitig siegelfähige Flachfolie 11 erforderlich, wobei zu beachten ist, daß durch entsprechende antiadhäsive Beschichtungen, wie etwa durch den Antrag einer sogenannten Release-Lackschicht auf den innen zu liegen kommenden Bahnrand oder auf die innere Bahnmitte der Flachfolie 11 ein Zusammensiegeln der Innenseite der gefalteten Schlauchhülle 23 verhindert werden muß.

Auf dem Restumfang der Siegeltrommel 2 zwischen der einen Einspeiserolle 6 und der an der Siegeltrommel 2 anliegenden Kühlwalze 9 wird die Nahtschmelze der gesiegelten Schlauchhülle 18 durch die schon erwähnte Kühleinrichtung, die ein umlaufendes gekühltes Stahlband aufweist, zum Erstarren gebracht. Von der Kühlwalze 9 wird die gesiegelte Schlauchhülle 18 über eine Umlenkwalze 10 auf dem Spulenkern einer Aufwickelrolle 19 aufgewickelt und danach der Weiterverarbeitung zugeführt. Eine beidseitig siegelfähige Flachfolie 11 kann mit überlappenden Bahnkanten auch ohne Siegelband gesiegelt werden. Material aus einer einseitig siegelfähigen Flachfolie 11 wird im allgemeinen auf Stoß vorgefaltet und muß dann mit dem Siegelband 14, das meist aus dem gleichen Material wie die Flachfolie hergestellt ist, gesiegelt werden. Das Heizband 3 ist nur geringfügig breiter als das Siegelband 14.

Je nach Verwendungszweck kann die Siegelschicht und somit das Siegelband nach innen oder nach außen gelegt werden. Bei innen liegendem Siegelband kann es zur Vermeidung von Siegelschichtbeschädigungen zweckmäßig sein, mit antiadhäsiven Beschichtungen auf der Rückseite des Siegelbandes oder auf der inneren Bahnmitte in Siegelnahtbreite zu arbeiten.

Die Vermeidung einer Überhitzung des Heizbandes 3 ist insbesondere dann wichtig, wenn aus siegeltechnischen Gründen mit einem auf der Siegelseite antiadhäsiv beschichteten Heizband 3 gesiegelt werden muß.

Es sei noch erwähnt, daß zwecks werbewirksamer Schlauchhüllenausstattung die Flachfolie 11 nach dem Ablauf vom Rollenwickel der Vorratsrolle 12 mittels sogenannter In-line geschalteter Druckwerke bedruckt werden kann.

Die Verarbeitungsgeschwindigkeit der Flachfolie 11 zu der gesiegelten Schlauchhülle 18 hängt im wesentlichen von der Verweilzeit der Flachfolie unter dem Heizband ab und steigt demzufolge mit zunehmendem Siegeltrommeldurchmesser.

In der Praxis werden Siegel- oder Schweißgeschwindigkeiten von 100 m/min gefahren.

In Fig. 2 sind Einzelheiten der Kühleinrichtung 27 gezeigt, die ein endlos umlaufendes Stahlband 26 aufweist, das über die Kühlwalze 9, eine Spannrolle 32, Umlenkrollen 28,29 und 30 geführt ist. Die Umlenkrolle 30 ist nahe der einen Einspeiserolle 6 für den elektrischen Strom des Heizbandes 3 angeordnet. Unterhalb der beiden Umlenkrollen 28 und 29 befindet sich eine Kühlwanne 31, die beispielsweise mit Wasser oder einer sonstigen geeigneten Kühlflüssigkeit gefüllt ist. Die Breite des Stahlbandes 26 ist geringfügig größer als die Breite des Siegelbandes 14. Die Breite der Kühlwalze 9 entspricht in etwa der Breite der Siegeltrommel 2.

Sowohl das Stahlband 26 als auch das Heizband 3 werden durch die Reibung am Umschlingungsumfang der silikonbeschichteten Siegeltrommel 2 mitgeführt und besitzen keinen eigenen Antrieb, nur die Siegeltrommel 2 wird angetrieben.

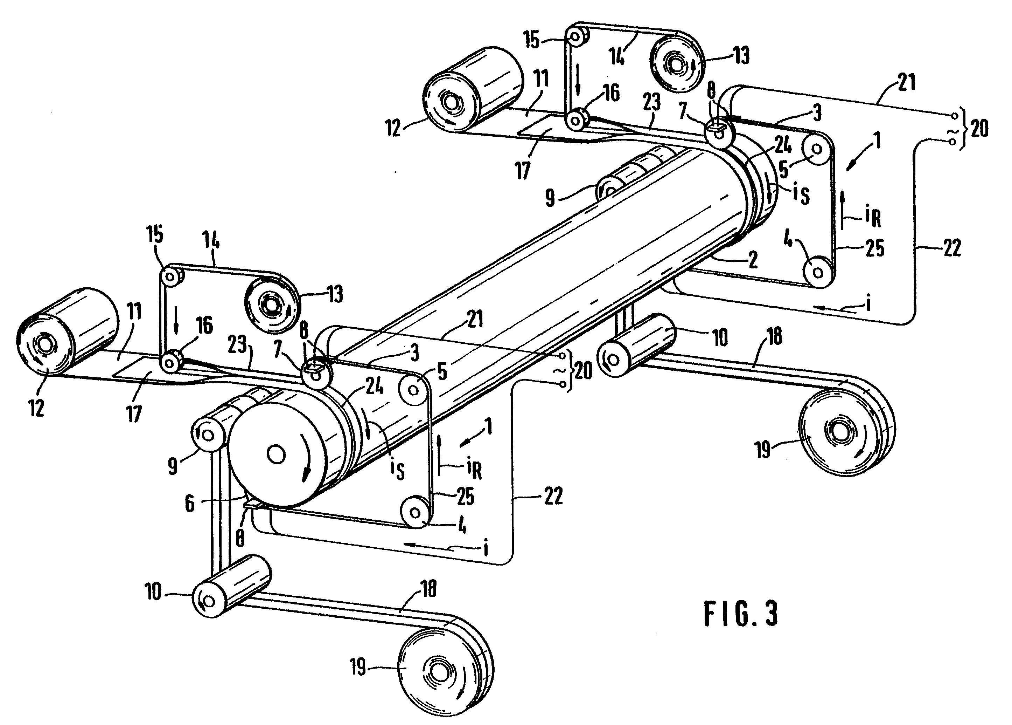

Fig. 3 zeigt schematisch in perspektivischer Darstellung eine Vorrichtung für mehrere Siegelbahnen, bei der die Siegeltrommel 2 so breit ausgebildet ist, daß z.B. bis zu sechs Heizbänder 3 nebeneinander auf der Teilumfangsfläche der Siegeltrommel 2 Platz haben. Die Vorratsrollen 12 für die Flachfolien 11 sind zum Teil übereinander und zum Teil nebeneinander angeordnet. Falls genügend Platz vorhanden ist, können auch alle Vorratsrollen nebeneinander oder übereinander angeordnet werden. Eine ähnliche Anordnung wie für die Vorratsrollen 12 der Flachfolien 11 ist für die Vorratsrollen 13 der Siegelbänder 14 getroffen.

Durch an sich bekannte, nicht gezeigte Einrichtungen werden die zu Schlauchhüllen 23 geformten Flachfolien 11 und die auf die Stoß- bzw. Überlappungsnähten der Schlauchhüllen aufliegenden Siegelbahnen nebeneinander liegend auf die Teilumfangsfläche der Siegeltrommel 2 gelenkt und unter der entsprechenden Anzahl von aufgeheizten und an die Teilumfangsfläche angedrückte Heizbänder 3 hindurchgeführt. Jedes Heizband 3 wird von einer eigenen Stromquelle mit Strom beliefert. Es sind soviele Kühlwalzen 9 wie Stahlbänder 26 zu Kühlzwecken vorhanden, die über die gesiegelten Schlauchhüllen 18 geführt sind, wobei die endlos umlaufenden Stahlbänder durch eine gemeinsame Kühlwanne 31 hindurchlaufen. Die gesiegelten Schlauchhüllen 18 sind über die Kühlwalzen 9 zu Umlenkwalzen 10 und von diesen zu Aufwickelrollen 19 geführt.

Obwohl dies nicht gezeigt ist, können mit der Vorrichtung nach Fig. 1 bzw. 3 auch flache, nicht gefaltete Kunststoff-Folienbänder entlang ihrer auf Stoß gebrachten oder sich überlappenden Bandkanten miteinander versiegelt werden. Der Aufbau der Vorrichtung ändert sich dann nur insoweit als daß die Falteinrichtungen mit den Schlauchformteilen entfallen.

**Patentansprüche**

1. Vorrichtung zum kontinuierlichen Schweißen bzw. Siegeln von Nähten von Kunststoff-Folien, mit zumindest einer Vorratsrolle für Flachfolien, mit einer Siegeltrommel, bei der über einen Teilumfang die Flachfolien geführt sind, mit einem endlosen, elektrisch erwärmten Heizband, das mittels Umlenk- und Spannrollen radial an die über den Teilumfang der sich drehenden Siegeltrommel geführten Flachfolien angedrückt ist, dadurch gekennzeichnet, daß eine Vorratsrolle (13) mit einem Siegelband (14) vorhanden ist, das über Umlenkrollen (15, 16) zu den übereinander gelegten Flachfolien (11, 11) oder zu einer zur Schlauchhülle (23) gefalteten Flachfolie geführt ist und die Überlappungs- bzw. Stoßnaht der Flachfolien bzw. der Flachfolie während des Schweißens bzw. Siegelns überdeckt, daß zumindest eine Kühlwalze (9) im Endpunkt des Teilumfangs an der Siegeltrommel (2) anliegt und daß die geschweißten Flachfolien bzw. die Schlauchhülle (18) nach dem Ablösen im Endpunkt des Teilumfangs von der Siegeltrommel (2) über die Kühlwalze (9) geführt sind bzw. geführt ist.

2. Vorrichtung nach Anspruch 1, dadurch gekennzeichnet, daß an dem Teilumfang der Siegeltrommel (2) Einspeiserollen (6, 7) für elektrischen Strom zum widerstandsmäßigen Erhitzen des Heizbandes (3) vorhanden sind und daß Schleifkontakte (8, 8) in Gestalt von Kohlebürsten mit einem regelbaren Transformator als Stromquelle verbunden sind und an den beiden Seiten der Einspeiserollen anliegen.

3. Vorrichtung nach Anspruch 2, dadurch gekennzeichnet, daß das Heizband (3) aus legiertem Stahl besteht und die Siegeltrommel (2) mit einem Winkel zwischen 180° bis 270° umschlingt, und daß die eine Einspeiserolle (7) im Anfangspunkt des Teilumfangs und die andere Einspeiserolle (6) in einem Punkt des Teilumfangs der Siegeltrommel (2) anliegt, der einem Umschlingungswinkel des Heizbandes (3) zwischen 180° und 210° entspricht.

4. Vorrichtung nach Anspruch 3, dadurch gekennzeichnet, daß der legierte Stahl des Heizbandes (3) eine Stahl-Chrom-Nickellegierug ist.

5. Vorrichtung nach Anspruch 2, dadurch gekennzeichnet, daß die Einspeiserollen (6, 7) zum Maschinengestell hin elektrisch isoliert gelagert sind und daß sich der eingespeiste Gesamtstrom (i) von den Einspeiserollen (6, 7) aus in zwei Teilströme, einen Siegeltrumstrom ($i_s$) und einen Rücklauftrumstrom ($i_R$) aufteilt.

6. Vorrichtung nach Anspruch 3, dadurch gekennzeichnet, daß die Position einer oder der beiden Einspeiserollen (6, 7) entlang dem Teilumfang der Siegeltrommel (2) einstellbar ist, um die Längen des Siegel- und des Rücklauftrums (24, 25) des Heizbandes (3) zu verändern und den elektrischen Widerstand und somit die Erwärmung im Rücklauftrum (25) so auszulegen, daß keine Schädigung der antiadhäsiven Heizbandbeschichtung durch überhitzen auftritt.

7. Vorrichtung nach Anspruch 2, dadurch gekennzeichnet, daß die Siegelseite des Heizbandes (3) antiadhäsiv beschichtet ist.

8. Vorrichtung nach Anspruch 1, dadurch gekennzeichnet, daß mehrere Heizbänder (3) bzw. Siegelspuren nebeneinander auf der Umfangsfläche der Siegeltrommel (2) liegen.

9. Vorrichtung nach Anspruch 1 oder 8, dadurch gekennzeichnet, daß für jedes Heizband (3) eine Kühleinrichtung (27) mit einer Kühlwalze (9) vorhanden ist, die ein oder mehrere endlos umlaufende Stahlbänder (26) aufweist, die durch eine mit Kühlflüssigkeit gefüllte Kühlwanne (31) hindurch- und um die Kühlwalze (9) herumgeführt sind.

10. Vorrichtung nach Anspruch 9, dadurch gekennzeichnet, daß das bzw. die Stahlbänder über einen Restteilumfang der Siegeltrommel (2) zwischen der einen Einspeiserolle (6) bzw. dem einen Satz von Einspeiserollen (6) und der bzw. den Kühlwalze(n) (9) an der Oberfläche der Siegeltrommel (2) anliegen.

11. Vorrichtung nach Anspruch 1 oder 12, dadurch gekennzeichnet, daß das bzw. die Stahlbänder (26) über eine bzw. mehrere Spannrollen (32), je einen bzw. mehrere Sätze von Umlenkrollen (28, 29, 30) geführt sind, von denen die Umlenkrolle(n) (30) an der Siegeltrommel (2) anliegt bzw. anliegen, und daß die Umlenkrollen (28, 29) über die das bzw. die Stahlbänder (27) horizontal geführt sind, in die Kühlflüssigkeit in der Kühlwanne (31) eintauchen.

## Revendications

1. Dispositif pour le soudage ou le scellement en continu de joints de feuilles de matière plastique, comprenant une bobine d'alimentation de feuilles plates, un tambour de scellement, sur lequel les feuilles plates sont guidées sur une partie de la circonférence, une bande chaufante sans fin, chauffée électriquement, qui est pressée radialement au moyen de rouleaux de renvoi et de tension contre les feuilles plates guidées sur la circonférence partielle du tambour de scellement tournant, caractérisé en ce qu'il est prévu une bobine d'alimentation (13) portant une bande de scellement (14) qui est amenée, par l'intermédiaire de rouleaux de renvoi (15, 16) aux feuilles plates (11, 11) placées l'une sur l'autre, ou à une feuille plate pliée pour former une enveloppe tubulaire (23), et qui recouvre le joint à recouvrement ou bord à bord des feuilles plates ou de la feuille plate pendant le soudage ou le scellement, en ce qu'au moins un cylindre refroidisseur (9) est appuyé contre le tambour de scellement (2) au point final de la partie de la circonférence, et en ce que les feuilles plates soudées ou l'enveloppe tubulaire scellée (18) sont ou est amenée(s) à passer sur le tambour refroidisseur (9) après s'être détachée(s) du tambour de scellement (2) au point final de la partie de la circonférence.

2. Dispositif selon la revendication 1, caractérisé en ce que, le long de la partie de la circonférence du tambour de scellement (2), il est prévu des rouleaux d'amenée du courant électrique (6, 7) pour chauffer la bande chauffante (3) par résistance, et des contacts glissants (8, 8) constitués par des frotteurs en charbon sont connectés à un transformateur réglable servant de source de courant électrique et sont appuyés sur les deux côtés des rouleaux d'amenée.

3. Dispositif selon la revendication 2, caractérisé en ce que la bande chauffante (3) est faite d'acier allié et embrasse le tambour de scellement (2) sur un angle compris entre 180° et 270°, et en ce que l'un des rouleaux d'amenée du courant (7) est en appui au point initial de la partie de la circonférence du tambour de scellement (2) et l'autre rouleau d'amenée du courant (6) en un point de la partie de la circonférence du tambour de scellement (2) qui correspond à un angle d'embrassement de la bande chauffante (3) compris entre 180° et 210°.

4. Dispositif selon la revendication 3, caractérisé en ce que l'acier allié de la bande chauffante (3) est un alliage acier-chrome-nickel.

5. Dispositif selon la revendication 2, caractérisé en ce que les rouleaux d'amenée du courant (6, 7) sont montés dans le bâti de la machine par des montages isolants de l'électricité, et en ce que le courant total (i) introduit est divisé, à partir des rouleaux d'amenée du courant (6, 7) en deux courants partiels, un courant ($i_S$) du brin de scellement et un courant du brin de retour ($i_R$).

6. Dispositif selon la revendication 3, caractérisé en ce que la position d'un ou des deux rouleaux d'amenée du courant (6, 7) est réglable le long de la partie de la circonférence du tambour de scellement (2), afin de faire varier les longueurs du brin de scellement et du brin de retour (25) de la bande chauffante (3) et de fixer la résistance électrique et, par conséquent, l'échauffement, dans le brin de retour (25) de manière qu'il ne se produise pas de détérioration de l'enduction anti-adhésive de la bande chauffante par surchauffe

7. Dispositif selon la revendication 2, caractérisée en ce que le côté de scellement de la bande chauffante (3) est enduit d'une couche anti-adhésive.

8. Dispositif selon la revendication 1, caractérisé en ce que plusieurs bandes chauffantes (3) ou pistes de scellement sont disposées l'une à côté de l'autre sur la surface circonférentielle du tambour de scellement (2).

9. Dispositif selon la revendication 1 ou 8, caractérisé en ce que, pour chaque bande chauffante (3), il est prévu un dispositif de refroidissement (27) comprenant un tambour refroidisseur (9), qui présente une ou plusieurs bandes d'acier (26) circulant sans fin, que l'on fait passer à travers un bac de refroidissement (31) rempli de liquide de refroidissement, et autour du tambour refroidisseur (9).

10. Dispositif selon la revendication 9, caractérisé en ce que la ou les bandes d'acier sont appuyées sur la surface du tambour de scellement (2), sur une partie restante de la circonférence du tambour de scellement (2), entre un des rouleaux d'amenée du courant (6) ou l'un des jeux de rouleaux d'amenée du courant (6) et le ou les tambour(s) refroidisseur(s)(9).

11. Dispositif selon la revendication 1 ou 2, caractérisé en ce que la ou les bandes d'acier (26) est ou sont guidées, en passant sur un ou plusieurs rouleaux de tension (32), sur un ou plusieurs jeux de rouleaux de renvoi (28, 29, 30) dont le ou les rouleaux de renvoi (30) est ou sont en appui sur le tambour de scellement (2), et en ce que les rouleaux de renvoi (28, 29) sur lesquels la ou les bandes d'acier (26) sont guidées horizontalement plongent dans le liquide de refroidissement contenu dans le bac de refroidissement (31).

## Claims

1. Apparatus for the continuous welding or sealing of seams of plastic films, comprising at least one supply roll for flat films; a sealing drum, over a part of the periphery of which the flat films are guided; an endless, electrically heated heating belt which, by means of deflecting and tensioning rollers, is pressed radially against the flat films guided over the part periphery of the rotating sealing drum; characterized in that a supply roll (13) with a sealing strip (14) is provided, said sealing strip being guided via deflecting rollers (15, 16) to the super-imposed flat films (11, 11) or to a flat film shaped into a tubular casing (23) and covering the overlapping or butt seam of the flat film(s) during welding or sealing, that at least one cooling roller (9) rests against the sealing drum (2) at the end point of the part periphery, and that the welded flat films or the tubular casing (18) are/is guided over the cooling roller (9) after being detached from the sealing drum (2) at the end point of the part periphery.

2. The apparatus as claimed in claim 1, characterized in that feed rollers (6, 7) supplying electric current for the resistance heating of the heating belt (3) are provided at the part periphery of the sealing drum (2) and that sliding contacts (8, 8) in the form of carbon brushes are connected to a variable transformer as a current source and are adjacent to the two sides of the feed rollers.

3. The apparatus as claimed in claim 2, characterized in that the heating belt (3) comprises alloyed steel and loops round the sealing drum (2) at an angle of between 180° and 270°, and that one feed roller (7) rests against the part periphery at the initial point of the latter and the other feed roller (6) rests against the part periphery of the sealing drum (2) at a point corresponding to a looping angle of the heating belt (3) of between 190° and 210°.

4. The apparatus as claimed in claim 3, characterized in that the alloyed steel of the heating belt (3) is a steel/chromium/nickel alloy.

5. The apparatus as claimed in claim 2, characterized in that the feed rollers (6, 7) are mounted so as to be electrically insulated relative to the machine frame, and that the total supplied current (i) divides into two part currents from the feed rollers (6, 7), namely into a sealing-strand current ($i_S$) and a return-strand current ($i_R$).

6. The apparatus as claimed in claims 3, characterized in that the position of one or both feed rollers (6, 7) is adjustable along the part periphery of the sealing drum (2), in order to vary the lengths of the sealing and return strands (24, 25) of the heating belt (3) and to set the electrical resistance and thus the heating in the return strand (25) such that no damage to the anti-adhesive heating-belt coating occurs as a result of overheating.

7. The apparatus as claimed in claim 2, characterized in that the sealing surface of the heating belt (3) has an anti-adhesive coating.

8. The apparatus as claimed in claim 1, characterized in that several heating belts (3) or sealing tracks are arranged next to one another on the peripheral surface of the sealing drum (2).

9. The apparatus as claimed in claim 1 or 8, characterized in that for each heating belt (3) there is provided a cooling device (27) with a cooling roller (9), each cooling device comprising one or more endlessly revolving steel belts (26) which are guided through a cooling trough (31) filled with cooling liquid and about the cooling drum (9).

10. The apparatus as claimed in claim 9, characterized in that the stell belt or steel belts rest(s) against the surface of the sealing drum (2) over a remaining part periphery of the sealing drum (2) between one feed roller (6) or one set of feed rollers (6) and the cooling roller or cooling rollers (9).

11. The apparatus as claimed in claim 1 or 10, characterized in that the steel belt or steel belts (26) is/are guided via one or more tensioning rollers (32) and via one or more sets of deflecting rollers (28, 29, 30), of which the deflecting roller or deflecting rollers (30) rest(s) against the sealing drum (2), and that the deflecting rollers (28, 29), via which the steel belt or steel belts (26) is/are guided horizontally, are immersed into the cooling (31).

FIG. 1

# FIG. 2

FIG. 3